(19) **Europäisches Patentamt / European Patent Office / Office européen des brevets**

(11) **EP 1 756 356 B1**

(12) **FASCICULE DE BREVET EUROPEEN**

(45) Date de publication et mention
de la délivrance du brevet:
**27.04.2016 Bulletin 2016/17**

(21) Numéro de dépôt: **05743196.7**

(22) Date de dépôt: **11.05.2005**

(51) Int Cl.:
*D07B 1/06* (2006.01)    *B60C 15/00* (2006.01)
*B60C 15/04* (2006.01)

(86) Numéro de dépôt international:
**PCT/EP2005/005086**

(87) Numéro de publication internationale:
**WO 2005/113887 (01.12.2005 Gazette 2005/48)**

(54) **PNEUMATIQUE COMPRENANT UN CABLE METALLIQUE**

DRAHTSEIL AUFWEISENDER REIFEN

TYRE COMPRISING A METALLIC CABLE

(84) Etats contractants désignés:
**AT BE BG CH CY CZ DE DK EE ES FI FR GB GR HU IE IS IT LI LT LU MC NL PL PT RO SE SI SK TR**

(30) Priorité: **12.05.2004 FR 0405162**

(43) Date de publication de la demande:
**28.02.2007 Bulletin 2007/09**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1463 Granges-Paccot (CH)**

(72) Inventeurs:
- **BARGUET, Henri**
  **FR-63430 Les Martres d'Artière (FR)**
- **POTTIER, Thibaud**
  **FR-63200 Malauzat (FR)**
- **ALVAREZ, Denis**
  **FR-63000 Clermont-Ferrand (FR)**
- **SIGNORET, Christian**
  **FR-63800 Cournon d'Auvergne (FR)**

(74) Mandataire: **Ribière, Joel**
  **Michelin & Cie**
  **Service SGD/LG/PI-LAD**
  **63040 Clermont-Ferrand Cedex 09 (FR)**

(56) Documents cités:
EP-A- 0 301 776    EP-A- 0 751 015
EP-A- 1 277 600    GB-A- 316 142
GB-A- 2 080 845    US-A- 4 690 191

**EP 1 756 356 B1**

**Description**

La présente invention est relative aux câbles métalliques à couches utilisables pour la fabrication des pneumatiques, en particulier pour le renforcement de leurs bourrelets permettant de fixer ces pneumatiques sur une jante de roue de véhicule.

Le document de brevet EP-A-582 196 a décrit le premier un pneumatique comportant un sommet surmontée d'une bande de roulement, une armature de sommet, deux flancs et deux bourrelets, une armature de carcasse passant dans les deux flancs et ancrée grâce à des moyens d'ancrage dans les bourrelets, dans lequel l'armature de carcasse comprend au moins un alignement circonférentiel de renforts (dits radiaux) orientés radialement, disposés de façon adjacente et pratiquement parallèles les uns aux autres, alignés circonférentiellement en au moins un alignement circonférentiel depuis les bourrelets vers les flancs, et dans lequel les moyens d'ancrage de ces renforts radiaux comprennent au moins un renfort (dit d'ancrage) orienté circonférentiellement, bordant axialement lesdits alignements circonférentiels desdits renforts radiaux et coopérant avec une portion adjacente de l'armature de carcasse par l'intermédiaire d'une composition de caoutchouc appropriée (dite gomme d'ancrage), à dureté élevée, en contact avec le renfort d'ancrage et les tronçons adjacents des premiers renforts radiaux, et assurant la transmission des efforts entre les renforts radiaux et les renforts d'ancrage. Pour la description détaillée de tels pneumatiques dits «sans tringle » car dépourvus de tringle conventionnelle massive, de diamètre relativement élevé, autour de laquelle s'enroule usuellement l'armature de carcasse, on pourra se reporter également, à titre d'exemples, aux documents de brevet EP-A-664 231, EP-A-664 232, EP-A-664 233 (ou US-A-5 660 656), WO-A-98/54006 ou WO-A-2004/009380.

Si cette nouvelle architecture de zone basse de pneumatique a certes donné d'excellents résultats, notamment en endurance, il a été cependant constaté que la forte rigidité des bourrelets pouvait entraîner des difficultés lors du montage et/ou démontage des pneumatiques, notamment lors d'opérations manuelles, ce problème étant particulièrement vrai pour des pneumatiques de grandes dimensions tels que par exemple des pneumatiques pour véhicules Poids-lourd.

On rappelle ici que le procédé de montage usuel d'un pneumatique "tubeless" sur une jante généralement monobloc et comportant une base creuse, consiste à faire passer une partie du premier bourrelet par-dessus le rebord de jante et à placer cette partie dans la base creuse, à faire passer alors le reste du bourrelet par-dessus le rebord grâce à une légère ovalisation du bourrelet correspondant du pneumatique, à répéter la même opération pour faire passer le second bourrelet par-dessus le rebord de la jante. Le montage est ensuite terminé par une étape finale de gonflage à une pression telle qu'elle assure la mise en place des bourrelets sur les sièges en appui sur les rebords de jante ; durant cette dernière étape les bourrelets peuvent franchir des *"humps"* qui forment un obstacle au passage desdits bourrelets jusqu'à leur siège respectif et préviennent ensuite les risques de déjantage.

Pour pallier ce problème de montabilité, on a proposé tout d'abord, selon l'enseignement du document de brevet EP-A-751 015 (ou US-A-5 702 548), l'emploi de câbles d'ancrage à allongement non-structural élevé, notamment des câbles à couches de construction (2+7) ou (3+8), ayant subi un traitement thermique spécifique. Ces câbles dits du type "grand-allongement" sont caractérisés, avant et après cuisson du pneumatique, par un allongement fonctionnel (somme de leur allongement élastique Ae et de leur allongement plastique Ap) particulièrement élevé, supérieur à 4%. Toutefois, un tel allongement est obtenu au prix d'un traitement thermique dit de recuit de restauration, conduit à basse température comprise entre 250°C et $Ac_1$ (température correspondant à une transformation de la structure cristalline de l'acier), qui présente l'inconvénient d'être relativement complexe et coûteux.

Toujours pour pallier ce problème de montabilité, la demande de brevet EP-A-1 277 600 a certes proposé une autre solution, plus économique, .consistant à utiliser à titre de gomme d'ancrage une composition de caoutchouc à rigidité réduite, présentant un module d'élasticité compris entre 10 et 20 MPa sous une déformation de 10%, et une résistance au fluage élevée grâce à une formulation spécifique. On constate toutefois aujourd'hui qu'une rigidité relativement faible de la gomme d'ancrage peut affecter quelque peu le comportement routier de véhicules équipés de tels pneumatiques, notamment sous des conditions de roulage sportives ; c'est notamment le cas sur des véhicules de tourisme de haut de gamme dont l'usager souhaite un très haut niveau de comportement routier, en toutes circonstances, sans compromis sur la sécurité, notamment sur les propriétés d'adhérence, ni sur la longévité des pneumatiques.

Poursuivant ses recherches, la Demanderesse a trouvé un nouveau câble à couches présentant notamment chacune une torsion élevée (soit des pas d'assemblage très courts), qui permet d'améliorer les compromis existants en terme de montabilité des pneumatiques et de comportement routier, sans nécessiter de modification de l'architecture de la zone basse des pneumatiques sans tringle.

En conséquence, un premier objet de l'invention concerne un pneumatique conforme à la revendication 1.

Grâce au câble spécifique, les bourrelets des pneus sans tringle sont avantageusement ovalisables, c'est-à-dire déformables dans leur plan, sous des efforts acceptables industriellement ; ces bourrelets peuvent être en outre plus facilement gauchis, c'est-à-dire que leur périmètre est plus aisément déformable, selon la direction axiale. Ces propriétés améliorent très sensiblement l'aptitude du pneumatique de l'invention à l'ovalisation et donc sa montabilité ; il est désormais possible d'utiliser des gommes d'ancrage à dureté élevée, favorables au comportement routier, sans passer nécessairement par l'emploi de câbles traités "grand-allongement".

Les pneumatiques de l'invention peuvent être destinés à des véhicules du type tourisme, 4x4, "SUV" *(Sport Utility Vehicles),* mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de génie civil, avions, autres véhicules de transport ou de manutention.

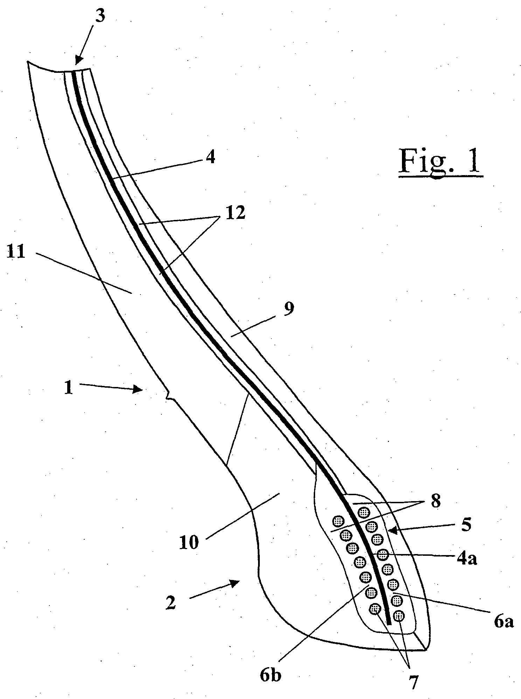

L'invention ainsi que ses avantages seront aisément compris à la lumière de la description et des exemples de réalisation qui suivent, ainsi que des figures 1 à 4 relatives à ces exemples qui schématisent, respectivement :

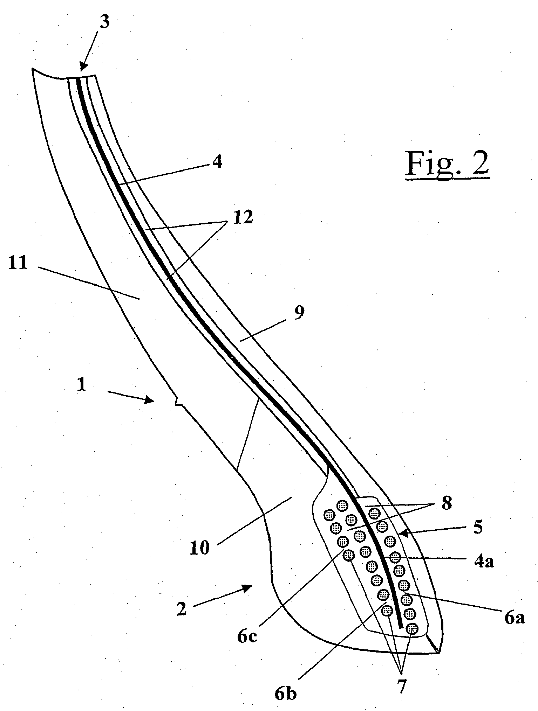

- une coupe transversale partielle montrant essentiellement une zone basse d'un pneumatique sans tringle, comportant notamment dans son bourrelet 2 une zone d'ancrage 5 d'une armature de carcasse 4, selon deux variantes de réalisation (Fig. 1 et 2) ;

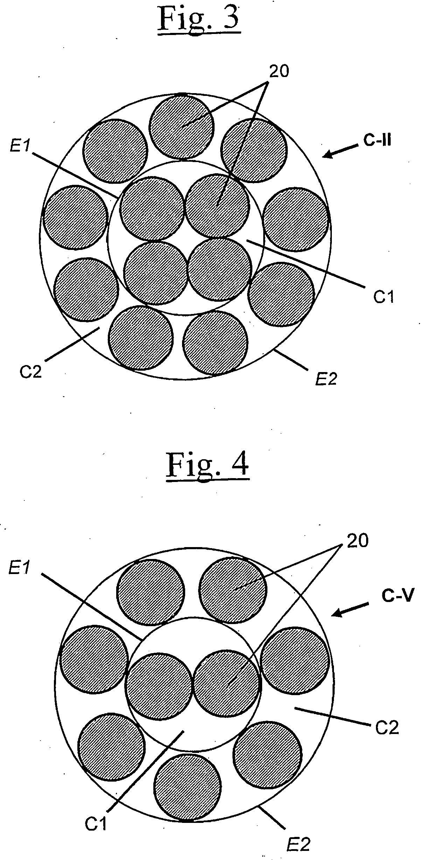

- une coupe transversale de câbles de constructions 4+9 (Fig. 3) et 2+7 (Fig. 4) utilisables dans ladite zone d'ancrage.

## I. DÉFINITIONS ET TESTS

I-1. Définitions

Dans la présente demande, on entend de manière connue par :

- "axiale", une direction parallèle à l'axe de rotation du pneumatique ; cette direction peut être "axialement intérieure" lorsqu'elle est dirigée vers l'intérieur du pneumatique et "axialement extérieure" lorsqu'elle est dirigée vers l'extérieur du pneumatique ;

- "bourrelet", la portion du pneumatique adjacente radicalement intérieurement au flanc et dont la base est destinée à être montée sur un siège de jante d'une roue de véhicule ;

- "élastomère (ou indistinctement caoutchouc) diénique", un élastomère issu au moins en partie (c'est-à-dire un homopolymére ou un copolymère) de monomère(s) diène(s) (monomère(s) porteur(s) de deux doubles liaisons carbone-carbone, conjuguées ou non) ;

- "élastomère diénique essentiellement saturé" un élastomère diénique issu au moins en partie de monomères diènes conjugués, ayant un taux de motifs ou unités d'origine diénique (diènes conjugués) qui est inférieur à 15% (% en moles) ;

- "élastomère diénique essentiellement saturé" un élastomère diénique issu au moins en partie de monomères diènes conjugués, ayant un taux de motifs ou unités d'origine diénique (diènes conjugués) qui est supérieur à 15% (% en moles) ;

- "élastomère diénique fortement insaturé" un élastomère diénique du type essentiellement saturé, ayant un taux de motifs ou unités d'origine diénique (diènes conjugués) qui est supérieur à 50% (% en moles) ;

- "élastomères isoprénique", un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères ;

- "flanc", la portion du pneumatique, le plus souvent de faible rigidité de flexion, située entre le sommet et le bourrelet ;

- "radiale", une direction passant par l'axe de rotation du pneumatique et normale à celui-ci ; cette direction peut être "radialement intérieure" ou "radialement extérieure" selon qu'elle se dirige vers l'axe de rotation du pneumatique ou vers l'extérieur du pneumatique,

- "élément de renforcement" ou "renfort", aussi bien des monofilaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage tel que gommage, ou encore pré-encollage pour favoriser l'adhésion sur le caoutchouc ;

- "renfort orienté circonférentiellement" ou "renfort circonférentiel", un renfort orienté sensiblement parallèlement à la direction circonférentielle du pneumatique, c'est-à-dire faisant avec cette direction un angle ne s'écartant pas de plus de cinq degrés de la direction circonférentielle ;

- "renfort orienté radialement" ou "renfort radial", un renfort contenu sensiblement dans un même plan axial ou dans un plan faisant avec un plan axial un angle inférieur ou égal à 10 degrés.

I-2. Tests

A) Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

En ce qui concerne les compositions de caoutchouc, les mesures de module sont effectuées en traction, sauf indication contraire selon la norme ASTM D 412 de 1998 (éprouvette "C") : on mesure en seconde élongation (c'est-à-dire après un cycle d'accommodation) les modules sécants vrais (ou modules d'Young) ramenés à la section réelle de l'éprouvette à 10% d'allongement, notés E10 et exprimés en MPa (conditions normales de température et d'hygrométrie selon la norme ASTM D 1349 de 1999).

B) Test de fluage statique

Le test dit "de fluage statique" est un test dans lequel on prépare des éprouvettes de composition de caoutchouc dont la partie utile a une longueur de 70 mm, une largeur de 5 mm et une épaisseur de 2,5 mm. (ces éprouvettes sont découpées dans des plaques vulcanisées d'épaisseur 2,5 mm) ; on met en place les éprouvettes dans une étuve à 150°C et on leur accroche immédiatement une masse de 3 kg ; le test s'effectue ainsi avec une contrainte initiale de :

$$\sigma_0 = \frac{Mg}{S_0} = 2{,}35 \; MPa$$

avec M : masse appliquée, g : accélération de la pesanteur et $S_0$ section initiale de l'éprouvette de mesure ; on mesure en fonction du temps l'allongement de la partie utile de l'éprouvette ; le "taux de fluage statique" correspond à la variation de déformation dans un temps donné, par exemple entre 3 et 5 heures de test :

$$\tau \approx \frac{\Delta \varepsilon}{\Delta t}$$

avec : $\Delta \varepsilon = \varepsilon(t_2) - \varepsilon(t_1)$ variation de la déformation mesurée pendant $\Delta t = t_2 - t_1$ en minutes (min).

C) Test de rhéométrie

Le test dit "de rhéométrie" est un test de cisaillement alterné à une déformation de $\pm$ 0,2 degrés, une fréquence de 100 cycles/min, une température de 197°C et une durée de 10 min (rhéomètre de la société Monsanto). Le test est réalisé sur un disque de composition de caoutchouc à l'état cru, on enregistre l'évolution pendant les 10 min du couple résultant du cisaillement imposé entre les deux faces du disque et on note l'évolution du couple après le maximum mesuré : si le couple mesuré reste stable, il n'y a pas de réversion, c'est-à-dire de diminution de la raideur de l'éprouvette ; si le couple mesuré diminue, il y a une réversion. Le phénomène de réversion traduit une diminution de la rigidité de l'éprouvette dans les conditions du test, c'est donc un test de la stabilité thermique du mélange à haute température.

On note :

$$r = \frac{C_{max} - C_{10}}{C_{max}} \times 100$$

le taux de réversion à l'issue du test ; $C_{max}$ est le couple maximum mesuré et $C_{10}$ est le couple mesuré après 10 min.

**II. DESCRIPTION DETAILLEE DE L'INVENTION**

Dans la présente description, sauf indication expresse différente, tous les pourcentages (%) indiqués sont des % en masse.

II-1. Câble à couches 4+N

Le câble métallique du pneumatique selon l'invention est un câble à deux couches de construction 4+N comportant un noyau ou couche interne (notée C1) de 4 fils de diamètre $d_1$ enroulés ensemble en hélice selon un pas $p_1$, cette couche C1 étant elle-même entourée d'une couche externe (notée C2) de N fils de diamètre $d_2$ enroulés ensemble en hélice selon un pas $p_2$, ce câble présentant en outre les caractéristiques suivantes ($d_1$, $d_2$, $p_1$ et $p_2$ en mm) ;

- 0,25 < $d_1$ < 0,40 ;
- 0,25 < $d_2$ < 0,40 ;
- 3,5 < $p_1$ < 7 < $p_2$ < 14.

Toutes les caractéristiques ci-dessus sont bien entendu mesurées lorsque le câble est au repos et son axe rectiligne.

Par câble métallique, on entend ici par définition un câble formé de fils constitués majoritairement (c'est-à-dire pour plus de 50% de ces fils) ou intégralement (pour 100% des fils) d'un matériau métallique.

Les fils des couches C1 et C2 peuvent avoir un diamètre identique ou différent d'une couche à l'autre. On utilise de préférence des fils de même diamètre d'une couche à l'autre (soit $d_1 = d_2$), notamment pour simplifier le procédé de câblage, comme schématisé par exemple sur la figure 3 annexée.

On rappelle ici que de manière connue le pas «p» représente la longueur, mesurée parallèlement à l'axe du câble, au bout de laquelle un fil ayant ce pas effectue un tour complet autour dudit axe du câble.

L'utilisation de pas $p_1$ et $p_2$ différents fait que, de manière connue, les fils des couches C1 et C2 sont essentiellement disposés selon deux couches cylindriques (ou tubulaires), adjacentes et concentriques, de telle manière que, au moins dans le câble au repos, l'épaisseur de la couche externe C2 est sensiblement égale au diamètre des fils qui la constituent ; il en résulte que les sections transversales de la couche interne C1 et de la couche externe C2, comme celle du câble, ont une enveloppe externe ou un contour (noté par exemple respectivement E1 et E2 sur les figures 3 et 4) qui est sensiblement circulaire.

Les câbles à couches cylindriques ou tubulaires ne doivent en particulier pas être confondus avec des câbles à couches dits "compacts", assemblages de fils enroulés au même pas et dans la même direction de torsion ; dans de tels câbles, la compacité est telle que pratiquement aucune couche distincte de fils n'est visible ; il en résulte que la section transversale de tels câbles a un contour qui n'est plus circulaire, mais polygones.

De préférence, les couches C1 et C2 sont enroulées dans le même sens de torsion (soit S/S ou Z/Z), ce qui présente comme avantage notable de minimiser la pression de contact entre les fils.

De préférence, la couche C2 du câble de l'invention comporte de 8 à 12 fils ($8 \leq N \leq 12$), plus préférentiellement de 8 à 10 fils ($8 \leq N \leq 10$).

Selon un autre mode préférentiel de réalisation de l'invention, pour une meilleure pénétrabilité des câbles par la gomme d'ancrage, la couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre $d_2$, plusieurs des N fils se trouvant éventuellement au contact les uns des autres. Réciproquement, cette couche tubulaire C2 serait qualifiée de "saturée" ou "complète" s'il n'existait pas suffisamment de place dans cette couche pour y ajouter au moins un (N+1)ème fil de diamètre $d_2$.

La figure 3 schématise, en coupe perpendiculaire à l'axe du câble (supposé rectiligne et au repos), un exemple d'un câble préférentiel de construction 4+9 (câble noté C-II dans les exemples qui suivent). La couche interne C1, formée de quatre fils 20 enroulés ensemble en hélice selon un pas $p_1$, est elle-même entourée et au contact d'une couche externe C2 de neuf fils 20 enroulés ensemble en hélice selon un pas $p_2$, et donc d'épaisseur sensiblement égale au diamètre $d_2$ desdits fils. On voit bien que les fils 20 sont ainsi disposés selon deux couches adjacentes et concentriques, tubulaires (couche C1 de contour *E1* et couche C2 de contour *E2).*

Selon un mode de réalisation préférentiel de l'invention, les caractéristiques suivantes sont vérifiées ($d_1$, $d_2$, $p_1$ et $p_2$ en mm) :

- 0,30 < $d_1$ < 0,40 ;
- 0,30 < $d_2$ < 0,40 ;
- 4,0 < $p_1$ < 7 et 8 < $p_2$ < 14.

C'est dans ces domaines étroits de diamètres $d_1$ et $d_2$ d'une part, de pas courts $p_1$ et $p_2$ d'autre part, que l'on a obtenu le meilleur compromis de performances. Plus préférentiellement encore, pour ces mêmes raisons, les relations suivantes sont vérifiées ($p_1$ et $p_2$ en mm) :

- 4,5 $\leq p_1 \leq$ 6,5 et 8,5 $\leq p_2 \leq$ 13,5.

L'allongement total à la rupture (At) du câble, somme de ses allongements structural, élastique et plastique (At = As + Ae + Ap), est de préférence supérieur à 2,5%, plus préférentiellement supérieur à 3,0%, encore plus préférentiellement supérieur à 3,5%.

Le présent câble pourrait être également traité grand allongement, pour lui conférer un allongement fonctionnel Af (Af = Ae + Ap) supérieur à 4%, de préférence supérieur à 5%, plus préférentiellement encore supérieur à 6%. Un tel traitement peut consister, on le rappelle, en un traitement thermique par effet Joule, par convection statique ou encore par induction, réalisé directement sur le câble, comme décrit dans la demande EP-A-751 015 précitée.

L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer) tels que décrits par exemple dans les demandes EP-A-648 891 ou WO-A-98/41682. Mais il est bien entendu possible d'utiliser d'autres aciers ou d'autres alliages.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Lorsque les câbles des composites de l'invention sont utilisés pour renforcer des bourrelets de pneu sans tringle, ils sont préférentiellement en acier au carbone et possèdent une résistance en traction (Rm) supérieure à 2000 MPa.

L'homme du métier sait comment fabriquer des fils d'acier présentant une telle résistance, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou drivers autres éléments connus (voir par exemple *Research Disclosure* 34984 - *"Micro-alloyed steel cord constructions for tyres"* - mai *1993 ; Research Disclosure* 34054 - *"High tensile strength steel cord constructions for tyres* "- août 1992).

Lorsqu'un acier au carbone est utilisé, sa teneur en carbone est de préférence comprise entre 0,1% et 1,2%, notamment entre 0,5% et 1,1%. Elle est plus préférentiellement comprise entre 0,6% et 1,0% (% en poids d'acier), une telle teneur représentant un bon compromis entre les propriétés mécaniques requises pour le composite et la faisabilité des fils.

Le câble présentement décrit pourrait être pourvu d'une frette externe, constituée par exemple d'un fil unique, métallique ou non, enroulé en hélice autour du câble selon un pas plus court que celui de la couche externe, et un sens d'enroulement opposé ou identique à celui de cette couche externe. Cependant, grâce à sa structure spécifique, le câble du pneumatique de l'invention, déjà auto-fretté, ne nécessite généralement pas l'emploi d'un fil de frette externe, ce qui résout avantageusement les problèmes d'usure entre la frette et les fils de la couche la plus externe du câble.

Le câble à couches précédemment décrit est fabriqué avec des dispositifs de câblage et selon des procédés bien connus de l'homme du métier qui ne sont pas décrits ici pour la simplicité de l'exposé. En raison de pas $p_1$ et $p_2$ différents, il nécessite deux opérations successives (fabrication de la première couche interne C1 puis câblage de la seconde couche externe C2 autour de cette couche C1), ces deux opérations pouvant avantageusement être réalisées en ligne à l'aide de deux câbleuses (par exemple câbleuses Barmag) disposées en série.

II-2. Utilisation en matrice de caoutchouc

Les câbles des pneumatiques conformes à l'invention sont destinés au renforcement des zones bourrelet des pneumatiques, en particulier des pneus sans tringle massive tels que décrits dans les documents de brevet précités, à titre de câble d'ancrage de l'armature de carcasse de tels pneumatiques.

De manière avantageuse, un tel câble, orienté circonférentiellement, coopère avec une portion adjacente de l'armature de carcasse par l'intermédiaire d'une composition de caoutchouc ou élastomère diénique (à titre de "gomme d'ancrage") au contact dudit câble et de ladite armature de carcasse.

Les élastomères diéniques peuvent être classés de manière connue en deux catégories, ceux dits essentiellement insaturés et ceux dits essentiellement saturés. C'est ainsi, par exemple, que les caoutchoucs butyle ou les copolymères de diènes et d'alpha-oléfines type EPDM entrent dans la définition d'élastomères diéniques essentiellement saturés (taux de motifs d'origine diénique faible ou très faible, toujours nettement inférieur à 15%).

Bien qu'elle soit applicable à tout type d'élastomère diénique, l'homme du métier du pneumatique comprendra aisément que la présente invention est préférentiellement mise en oeuvre avec des élastomères diéniques du type fortement insaturés.

L'élastomère diénique est notamment choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

On utilise plus préférentiellement au moins un élastomère isoprénique, encore plus préférentielletnent du caoutchouc naturel ou un polyisoprène de synthèse du type cis-1,4 ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

L'élastomère isoprénique peut être utilisé seul ou en coupage avec d'autres élastomères diéniques, notamment des élastomères SBR et/ou BR tels que précités, que l'élastomère isoprénique soit présent à titre majoritaire ou non parmi l'ensemble des élastomères diéniques utilisés.

Ainsi, selon un mode particulier de réalisation de l'invention, on peut utiliser par exemple, en coupage avec l'élastomère isoprénique (notamment du caoutchouc naturel) un copolymère SBR ayant une Tg (température de transition vitreuse, mesurée selon ASTM D3418) comprise de préférence entre -70°C et -10°C, qu'il soit préparé en émulsion (E-SBR) ou en solution (S-SBR), selon une proportion de 0 à 70 pce (parties en poids pour cent parties d'élastomère), le reste (soit 30 à 100 pce) étant constitué par l'élastomère isoprénique. On utilise alors plus particulièrement un SSBR. Auxdits SBR peut être également associé un BR possédant de préférence plus de 90% (% molaire) de liaisons cis-1,4, ledit BR ayant une Tg comprise de préférence entre -110°C et -50°C.

Enfin, le ou les élastomères diéniques peuvent être utilisés en association avec tout type d'élastomère synthétique autre que diénique, voire avec des polymères autres que des élastomères, par exemple des polymères thermoplastiques.

Une telle composition comporte en outre tous les constituants usuels habituellement utilisés dans les matrices de caoutchouc destinées en particulier à la fabrication de zones basses de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des agents facilitant la mise en oeuvre (processabilité) des compositions à l'état cru, des stéaramides, des résines tackifiantes, un système de réticulation à base soit de soufre, soit de donneurs de soufre et/ou de peroxyde, des accélérateurs, des activateurs ou retardateurs de vulcanisation, des agents antiréversion tels que par exemple l'hexathiosulfonate de sodium ou le N,N'-m-phénylène-biscitraconimide, des accepteurs et donneurs de méthylène, des résines renforçantes, des bismaléimides, des systèmes promoteurs d'adhésion connus du type "RFS" (résorcinol-formaldéhyde-silice) ou sels métalliques, notamment sels de cobalt ou de nickel.

L'homme de l'art saura, à la lumière de la présente description, ajuster la formulation de la composition de caoutchouc afin d'atteindre les niveaux de rigidité (module d'élasticité) souhaités, et donner une excellente résistance au fluage à haute température et une très bonne stabilité à haute température.

La résistance au fluage est essentielle pour obtenir un ancrage solide et durable des armatures de carcasse dans les bourrelets et la stabilité thermique à haute température est elle aussi importante en raison des conditions thermiques très sévères que peuvent subir en service certains bourrelets de pneumatiques, notamment des pneumatiques pour véhicules lourds, routiers ou non.

Ainsi, de préférence, la gomme d'ancrage supporte sans rompre une sollicitation de fluage statique à 150°C sous une contrainte initiale de 2,35 MPa pendant au moins 5 heures ; plus préférentiellement, son taux de fluage statique à 150°C, sous une contrainte initiale de 2,35 MPa, reste inférieur à $2,10^{-3}$/min entre 3 et 5 heures de sollicitation. D'autre part et de préférence, ladite gomme a un taux de réversion, après 10 min à 197°C, qui est inférieur à 10% et plus préférentiellement inférieur à 5%.

Le système de réticulation est préférentiellement un système de vulcanisation à base de soufre et d'un accélérateur de vulcanisation. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (par exemple diphénylguanidine), etc.

Le soufre est utilisé à un taux préférentiel compris entre 3 et 15 pce (parties en poids pour cent parties d'élastomère), plus préférentiellement entre 5 et 12 pce. L'accélérateur primaire de vulcanisation, par exemple un sulfénamide, est utilisé à un taux préférentiel compris entre 0,5 et 7 pce, plus préférentiellement compris entre 1 et 5 pce.

Le taux de charge renforçante, par exemple noir de carbone ou charge inorganique renforçante telle que silice, est de préférence supérieur à 50 pcc, par exemple compris entre 60 et 140 pce. Il est plus préférentiellement supérieur à 70 pce, par exemple entre 70 et 120 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 m$^2$/g, de préférence de 30 à 400 m$^2$/g. A titres de silices précipitées hautement dispersibles (dites "HD"), on citera par exemple les silices Ultrasil 7000 et Ultrasil 7005 de la société Degussa, les silices Zéosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

Pour coupler l'élastomère diénique à la charge inorganique renforçante, le cas échéant, on utilise un agent de couplage (ou agent de liaison) au moins bifonctionnel destiné de manière connue à assurer une connexion suffisante, de nature chimique et/ou physique, entre la charge inorganique (surface de ses particules) et l'élastomère diénique, en particulier des organosilanes ou des polyorganosiloxanes bifonctionnels.

La composition ou matrice de caoutchouc a pour caractéristique préférentielle de présenter, à l'état vulcanisé, un module sécant en extension, à 10% d'allongement (noté E10), qui est supérieur à 20 MPa, plus préférentiellement supérieur à 30 MPa, C'est dans ces domaines de rigidité, notamment entre 40 et 70 MPa, que l'on a observé le meilleur compromis de performances.

Dans les cas des plus fortes rigidités, la composition de caoutchouc pourra avantageusement comprendre une résine renforçante additionnelle constituée par exemple d'un accepteur de méthylène tel qu'une résine formophénolique, à un taux préférentiel compris entre 3 et 15 pce, plus préférentiellement compris entre 5 et 12 pce, et un donneur de méthylène tel que l'hexaméthylènetétramine ("HMT") ou encore l'hexaméthoxy-méthylmélamine ("H3M"), à un taux préférentiel compris entre 1 et 10 pce, plus préférentiellement compris entre 3 et 7 pce.

Mais le câble du pneumatique de l'invention est également utilisable avec une gomme d'ancrage à rigidité réduite, présentant notamment un module d'élasticité compris entre 10 et 20 MPa, comme décrit par exemple dans la demande de brevet EP-A-1 277 600 précitée.

II-3. Utilisation en pneumatique

Le câble du pneumatique de l'invention est avantageusement utilisable pour le renforcement d'un pneumatique, sous la forme d'un composite métal/ caoutchouc. Un tel composite peut se présenter sous des formes variées, par exemple sous la forme d'une nappe, bande, bandelette ou série de bandelettes, autres blocs de caoutchouc de formes et dimensions variées selon les applications visées, dans lesquels sont incorporés ou avec lesquels coopèrent des câbles 4+N précédemment décrits.

Dans ce composite, l'adhésion définitive entre le métal et la composition de caoutchouc est obtenue de manière connue à l'issue de la cuisson de l'article fini, par exemple le pneumatique, comportant le composite. De préférence, cette cuisson est opérée sous pression.

Un tel composite constitue une partie d'une zone bourrelet d'un pneumatique dépourvu de tringle massive conventionnelle, ladite partie de zone bourrelet étant destinée à assurer l'ancrage de l'armature de carcasse dudit pneumatique.

Un tel pneu sans tringle, tel que décrit par exemple dans sa construction générale dans les documents EP-A-582 196, EP-A-664 231, EP-A-664 232, EP-A-664 233, WO-A-98/54006 ou WO-A-2004/009380 précités, comporte généralement un sommet surmontée d'une bande de roulement, une armature de sommet, une armature de carcasse passant dans les flancs et rejoignant deux bourrelets conçus pour être montés sur une jante de roue de véhicule. Ladite armature de carcasse comporte des premiers renforts (ou "renforts radiaux") disposés de façon adjacente et pratiquement parallèles les uns aux autres, alignés circonférentiellement en au moins un alignement circonférentiel depuis au moins l'un desdits bourrelets vers l'un desdits flancs et ancrée dans ledit bourrelet, ce dernier comportant une zone d'ancrage permettant le maintien de l'armature de carcasse et comprenant au moins un second renfort ("renfort d'ancrage" ou "câble d'ancrage") orienté circonférentiellement coopérant avec une portion adjacente de l'armature de carcasse par l'intermédiaire d'une composition de caoutchouc (ou "gomme d'ancrage") en contact avec le renfort d'ancrage et les tronçons adjacents des premiers renforts radiaux. Dans ce pneumatique, le câble et la gomme d'ancrage sont tels que définis aux paragraphes II-1 et II-2 qui précèdent.

Les renforts radiaux ci-dessus sont par exemple des câblés textiles en polyester (par exemple PET HMLS), PEN, rayonne ou autre cellulose, Nylon, aramide ou encore en matériau hybride (par exemple aramide/Nylon).

A titre d'exemple non limitatif, sont schématisés à la figure 1, en coupe transversale partielle, un bourrelet et un flanc d'un tel pneumatique, dans lequel l'ancrage conventionnel, par retournement de l'armature de carcasse autour d'une tringle massive, est rappelons-le remplacé par un agencement dans lequel on dispose de façon adjacente à la structure de renforts radiaux, des câbles d'ancrage circonférentiel, le tout étant noyé dans un mélange caoutchouteux ou gomme d'ancrage.

Ce pneumatique comprend un flanc 1 adjacent à un bourrelets 2. Une armature de carcasse 3 s'étend circonférentiellement du bourrelet 2 vers le flanc 1 et comporte dans l'exemple présenté un alignement circonférentiel de premiers renforts radiaux 4. Cette armature de carcasse 3 peut être agencée de façon continue d'un bourrelet à l'autre, en passant par les flancs et le sommet du pneumatique, ou encore, elle peut comporter deux ou plusieurs parties, agencées par exemple le long des flancs, notamment sans couvrir la totalité du sommet. Les renforts radiaux 4, par exemple ici des câblés textiles en PET HMLS, sont orientés radialement dans les bourrelets et les flancs, et sont ancrés dans une zone d'ancrage 5 du bourrelet 2.

La zone d'ancrage 5 comprend de préférence deux enroulements ou "piles" circonférentiels 6a et 6b de seconds renforts ou câbles d'ancrage 7 disposés de part et d'autre du tronçon 4a des premiers renforts radiaux 4 adjacents, lesdites piles 6a et 6b coopérant avec une gomme d'ancrage 8 dans laquelle ils sont incorporés.

Cette gomme d'ancrage 8 enrobe complètement le tronçon 4a des renforts radiaux 4, et les enroulements ou piles circonférentiels 6a et 6b de câble d'ancrage 7, afin d'ancrer solidement le tronçon 4a des renforts radiaux 4 dans la zone d'ancrage 5 du bourrelets 2 et reprendre les efforts subis par les premiers renforts 4 dus notamment à la pression de gonflage du pneumatique. Les piles 6 peuvent être réalisées par exemple par juxtaposition de plusieurs éléments circonférentiels de câbles 7 différents, ou par enroulement (sensiblement à zéro degré) en spirale d'un seul et même câble 7, les spires étant bien entendu, en tout cas, non jointives. Le câble d'ancrage 7 est un câble à deux couches de construction 4+9 tel qu'illustré à la figure 3, conforme à l'invention. Le nombre total de ces câbles ou d'enroulements du même câble est par exemple compris dans un domaine de 10 à 25 environ, pour les deux piles 6a et 6b confondues.

A titre d'exemple, la distance moyenne inter-câbles (ou inter-enroulements) est de l'ordre de 0,3 mm ; la distance minimale (pour éviter tout contact direct entre textile et métal) séparant le tronçon 4a et chacune des deux piles 6a et 6b est comprise entre 0,5 et 0,8 mm.

Axialement intérieurement relativement à l'enroulement circonférentiel de câbles d'ancrage 6a, on trouve un mélange de caoutchouc 9 usuel à titre de "gomme intérieure" dont la fonction est d'assurer l'étanchéité avec l'intérieur de l'enveloppe du pneumatique. Axialement extérieurement relativement à l'enroulement circonférentiel 6b des câbles d'ancrage, on trouve un mélange protecteur 10, puis radialement extérieurement, un mélange flanc 11 qui le remplace progressivement. Radialement extérieurement à la zone d'ancrage 5, les renforts radiaux 4 de l'armature de carcasse 3 sont en contact direct avec un mélange 12.

Les premiers renforts 4 de ce bourrelet de pneumatique sont donc en contact avec deux mélanges caoutchouteux différents, la gomme d'ancrage 8 dans la zone d'ancrage 5 et le mélange 12 radialement extérieurement. La gomme d'ancrage a comme caractéristique mécanique préférentielle un module d'élasticité (E10) supérieur à 20 MPa tandis que le mélange 12 a une rigidité plus faible, avec un module compris entre 3 et 10 MPa.

Dans la zone d'ancrage 5 du bourrelet 2, la gomme d'ancrage 8 est le seul mélange caoutchouteux en contact avec les premiers 4 et seconds 7 renforts. Cette gomme d'ancrage donne à cette structure une excellente résistance mécanique aux efforts subis lors du gonflage du pneumatique et en roulage.

La figure 1 commentée ci-dessus ne schématise qu'un seul exemple préférentiel de structure d'ancrage de la zone basse d'un pneumatique utilisant le câble selon l'inventiou.

L'homme du métier comprendra aisément qu'un grand nombre d'autres variantes sont possibles, par exemple avec des zones d'ancrage 5 comportant trois piles d'ancrage 6a, 6b et 6c, de part et d'autre du tronçon 4a des renforts radiaux 4, voire plus de trois piles.

La figure 2 schématise une coupe transversale partielle d'un autre exemple possible de pneumatique dont la zone d'ancrage 5 comporte la même gomme d'ancrage 8 mais trois piles circonférentielles 6a, 6b et 6c de câble d'ancrage 7 de construction 4+9, conforme à l'invention. Le nombre total de ces câbles est par exemple compris dans un domaine de 15 à 30 environ, pour les trois piles 6a, 6b et 6c confondues.

A titre d'exemple, la distance moyenne inter-câbles (ou inter-enroulements) est de l'ordre de 0,3 mm, la distance moyenne inter-piles (entre piles 6b et 6c sur cette figure 2) est de l'ordre de 0,5 mm et la distance minimale (pour éviter tout contact direct entre textile et métal) séparant le tronçon 4a et chacune des deux piles 6a et 6b est comprise entre 0,5 et 0,8 mm.

D'autres variantes possibles de réalisation du pneumatique de l'invention consisteront par exemple en l'emploi de plusieurs tronçons 4a de renforts radiaux 4 dans la zone d'ancrage 5 du bourrelet 2, ou de plusieurs alignements 4 de renforts radiaux dans la même armature de carcasse 3, y compris dans le flanc 1, voire encore de plusieurs armatures de carcasse 3 dans ce flanc 1.

Une autre variante possible de réalisation consistera en un ancrage non-linéaire tel que décrit dans la demande WO-A-2004/009380 précitée.

Dans une autre variante possible de réalisation de l'invention, prise seule ou en combinaison avec au moins l'une des variantes précédemment décrites, les renforts radiaux individuels 4 pourraient bien entendu être remplacés par des groupements de plusieurs renforts radiaux parallèles, regroupés entre eux par exemple sous forme de bandelettes caoutchoutées renforcées par lesdits renforts radiaux, comme décrit par exemple dans la demande EP-A-919 406.

A titre non limitatif, il est à noter que la fabrication des pneumatiques selon l'invention peut avantageusement être réalisée selon un procédé n'impliquant pas ou peu de transformations de formes à l'état cru. Par exemple, on peut assembler l'ébauche du futur pneumatique sur un noyau rigide imposant la forme de sa cavité intérieure. On applique sur ce noyau, dans l'ordre requis par l'architecture finale, tous les constituants individuels du pneumatique, qui sont disposés directement à leur place finale, aucune portion du pneumatique n'étant ultérieurement déplacée ni repliée contre une autre, comme c'est généralement le cas dans les modes d'assemblage classiques. Cette fabrication peut notamment utiliser les dispositifs décrits dans les documents de brevet EP-A-243 851 (ou US-A-4 795 523) pour la pose des renforts radiaux de l'armature de carcasse et EP-A-264 600 (ou US-A-4 963 207) pour la pose des gommes ou compositions de caoutchouc. Le pneumatique peut alors être moulé et vulcanisé comme exposé par exemple dans le document de brevet BP-A-242 840 (ou US 4 895 692).

## III. EXEMPLES DE REALISATION DE L'INTENTION

III-1. Câbles d'ancrage

Pour la réalisation des exemples de réalisation qui suivent, on utilise des câbles à couches cylindriques de différentes constructions, 4+9 et 2+7, conformes ou non à l'invention selon les cas, constituées de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm, ou encore en partant directement de fils commerciaux intermédiaires dont le diamètre est voisin de 1 mm. L'acier utilisé est un acier au carbone du type à haute résistance (dit HT pour *"Xigh Tensile"*) dont la teneur en carbone est de 0,82% environ, comportant 0,5% de manganèse environ, le reste étant constitué de fer et des impuretés inévitables habituelles liées au procédé de fabrication de l'acier (pour exemple, teneurs en silicium : 0.25% ; phosphore : 0.01% ; soufre : 0.01%; chrome : 0.11%; nickel : 0.03% ; cuivre : 0.01% ; aluminium : 0.005% ; azote : 0.003%).

Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils ainsi préparés (référencés 20 sur les figures 3 et 4), tous de diamètre égal à 0,35 mm environ, ont les propriétés mécaniques suivantes :

- Force-rupture : 265 N ;
- Module d'Young: 210 GPa;
- Résistance à la rupture : 2790 MPa ;
- Allongement à la rupture : 2,2% (Ae = 1,4% + Ap = 0,8%).

Ces fils sont ensuite assemblés sous forme de différents câbles à couches cylindriques, référencés C-I à C-V, dont la construction et les propriétés mécaniques sont données dans le tableau 1.

Tableau 1

| Câble | Construction | $p_1$ (mm) | $p_2$ (mm) | Fm (daN) | Rm (MPa) | At (%) | Af (%) |
|---|---|---|---|---|---|---|---|
| C-I | 4+9 | 7.5 | 15.0 | 280 | 2210 | 5.9 | 5.7 |
| C-II | 4+9 | 5.0 | 10.0 | 305 | 2275 | 3.8 | 3.5 |
| C-III | 4+9 | 5.0 | 10.0 | 275 | 2105 | 6.5 | 6.2 |
| C-IV | 2+7 | 7.5 | 15.0 | 196 | 2275 | 5.3 | 5.2 |
| C-V | 2+7 | 5.0 | 10.0 | 215 | 2425 | 3.4 | 3.2 |

Les câbles de construction [4+9], notés C-I à C-III, sont des câbles non frettés (sans fil de frette externe) et formés de treize fils 20 au total, comme illustré à la figure 3. Ils comportent une couche interne C1 de quatre fils 20 enroulés ensemble en hélice (direction S) selon le pas $p_1$, cette couche CI étant au contact d'une couche externe cylindrique de neuf fils 20 eux-mêmes enroulés ensemble en hélice (direction S) autour de l'âme, selon le pas $p_2$.

Le câble C-I (non conforme à l'invention) possède des pas $p_1$ et $p_2$ conventionnels longs ($p_1$ = 7,5 mm ; $p_2$ = 15 mm) ; comme enseigné dans la demande EP-A-751 015 précitée, il a été soumis à un traitement "grand-allongement" afin de lui conférer un allongement fonctionnel Af supérieur à 4,0%.

Seuls les câbles C-II et C-III sont conformes à l'invention, avec des pas $p_1$ et $p_2$ courts qui vérifient les relations 4,0 <$p_1$ <7 et 8 <$p_2$< 14 précitées. L'allongement total At du câble C-II, non traité "grand-allongement" contrairement au câble témoin C-I, est avantageusement supérieur à 3,0%. Pour comparaison, le câble C-III, de même construction que le câble C-II, a subi en plus un traitement grand-allongement, ce qui lui confère un allongement fonctionnel Af et un allongement total At très élevés, puisque tous deux supérieurs à 6,0%. Ce traitement a consisté à chauffer le câble en continu pendant son défilement, par induction sous atmosphère protectrice (par exemple hydrogène) ; la durée de chauffage était de 0,1 seconde environ, la température de traitement de 450°C. Après le chauffage, le câble a été refroidi sous atmosphère protectrice ($H_2$) puis enroulé sur bobine.

On note par ailleurs que ces câbles C-II et C-III conformes à l'invention vérifient avantageusement les relations préférentielles qui suivent ($d_1$, $d_2$, $p_1$ et $p_2$ en mm) :

- 0,30 < $d_1$ = $d_2$ < 0,40 ;
- 4,5 ≤ $p_1$ ≤ 6,5;
- 8,5 ≤ $p_2$ ≤ 13,5.

Quant aux deux autres câbles témoins, de construction 2+7, notés C-IV et C-V, également non frettés, ils sont formés de neuf fils 20 au total, comme illustrés à la figure 4. Ils comportent une couche interne CI de deux fils 20 enroulés ensemble en hélice (direction S) selon le pas $p_1$, cette âme étant au contact d'une couche externe cylindrique de sept fils 20 eux-mêmes enroulés ensemble en hélice (direction S) autour de l'âme, selon le pas $p_2$. Le câble C-IV possède des pas $p_1$ et $p_2$ conventionnels longs ($p_1$ = 7,5 mm ; $p_2$ = 15 mm), il a tété soumis à un traitement "grand-allongement" afin de lui conférer un allongement Af supérieur à 4,0%. Le câble C-V possède des pas $p_1$ et $p_2$ courts ($p_1$ = 5 mm ; $p_2$ = 10 mm), il n'a pas subi de "traitement grand-allongement".

III-2, Gomme d'ancrage

Pour les tests qui suivent, les câbles d'ancrage C-I et C-II d'une part, C-IV, et C-V d'autre part, sont associés à une même gomme d'ancrage, à rigidité élevée à l'état cuit (module E10 égal à environ 55 MPa).

Cette gomme d'ancrage est une composition connue à base d'élastomère diénique (coupage 50/50 de NR et de SSBR ayant une Tg d'environ -50°C), et de noir de carbone (environ 75 pce) à titre de charge renforçante. Elle comporte essentiellement, en plus, un antioxydant (environ 2 pce), une résine renforçante (environ 10 pce de résine formophénolique et 5 pce de donneur de méthylène H3M), un sel métallique (environ 4 pce de naphténate de cobalt) en tant que promoteur d'adhésion vis-à-vis du métal, enfin un système de vulcanisation (environ 9 pce de soufre, 1,5 pce d'accélérateur, 9 pce de ZnO et 1,5 pce d'acide stéarique).

III-3. Tests comparatifs sur pneumatiques

Les câbles et gommes d'ancrage ci-dessus sont utilisés comme structure d'ancrage d'une armature de carcasse de pneumatiques sans tringle à carcasse radiale, de dimension 225/45 R17 (indice de vitesse Y), conventionnellement fabriqués et en tous points identiques hormis la construction de leur zone d'ancrage 5.

Ces pneumatiques comportent de manière connue un sommet surmontée d'une bande de roulement, une armature de sommet et, en se référant maintenant par exemple aux numérotations des figures 1 ou 2, deux flancs 1 et deux bourrelets 2, une armature de carcasse 3 passant dans les deux flancs 2 et ancrée grâce à des moyens d'ancrage 5 (6a, 6b, 8) dans les deux bourrelets 2. L'armature de carcasse 3 comprend au moins un alignement circonférentiel de renforts radiaux 4, disposés de façon adjacente et pratiquement parallèles les uns aux autres, alignés circonférentiellement en au moins un alignement circonférentiel depuis au moins l'un desdits bourrelets 2 vers l'un desdits flancs 1. Les moyens d'ancrage 5 (6a, 6b, 8) desdits renforts radiaux 4 dans au moins un bourrelet 2 comprennent au moins un câble d'ancrage 7 orienté circonférentiellement, bordant axialement lesdits alignements circonférentiels des renforts radiaux 4 et coopèrent avec une portion adjacente de l'armature de carcasse 3 par l'intermédiaire d'une gomme d'ancrage 8 en contact avec le câble d'ancrage 7 et les tronçons adjacents 4a des premiers renforts radiaux 4. Les câbles d'ancrage 7 utilisés dans ces pneumatiques sont les câbles C-I et C-II d'une part, C-IV et C-V d'autre part, du tableau 1.

Les pneumatiques notés P-I, P-II, P-IV et P-V correspondent respectivement aux câbles C-I, C-II, C-IV et C-V. Ils comportent plus précisément une zone basse telle que schématisée sur la figure 1 en ce qui concerne les pneus P-I et P-II, avec seulement 2 piles d'ancrage 6a et 6b comportant au total 15 enroulements de câble 7, ou sur la figure 2 en ce qui concerne les pneus P-IV et P-V avec dans ce cas 3 piles d'ancrage 6a, 6b et 6c comportant au total 21 enrouements de câble 7. Dans chacune des piles d'ancrage, les câbles d'ancrage sont disposés selon une direction circonférentielle, parallèlement les uns aux autres, distants les uns des autres d'environ 0,3 mm.

Ces pneumatiques, montés ou non sur une jante de dimension appropriée selon le type d'analyse réalisée, ont été testés en conditions statiques et dynamiques, sur différentes machines de roulage ou autre tests, afin de comparer leurs performances sur les critères définis ci-après.

A) Endurance en roulage longue durée :

L'endurance en roulage est appréciée par un test de roulage de très longue durée (40 000 km) sur une machine de roulage automatique, sous une charge très élevée (surcharge par rapport à la charge nominale) et à la même vitesse, pendant un nombre prédéfini de kilomètres. Si le pneumatique arrive au bout du test sans destruction, une note maximale de 100 lui est attribuée ; dans le cas contraire, sa note est réduite au prorata du kilométrage parcouru avant destruction.

B) Endurance en roulage haute vitesse :

L'endurance en roulage à haute vitesse est appréciée en soumettant chaque enveloppe à une montée en vitesse progressive, selon des paliers déterminés, jusqu'à une vitesse limite préalablement fixée (supérieure à 300 km/h). Si le pneumatique arrive au bout du test sans destruction, une note maximale de 100 lui est attribuée ; dans le cas contraire, sa note est réduite au prorata du kilométrage parcouru avant destruction.

C) Montabilité (aptitude à l'ovalisation) :

Un test de montabilité est pratiqué dans lequel on écrase progressivement, radialement, l'enveloppe de pneumatique (non montée sur sa jante) pour apprécier son aptitude à l'ovalisation, c'est-à-dire sa déformabilité dans son propre plan.

Le test est volontairement conduit sous des conditions de déformation très sévères, jusqu'à obtenir un flambage de la structure du bourrelet et l'apparition d'au moins une déformation permanente (bosse visible à l'oeil nu) sur l'extérieur de la zone basse du pneumatique. Plus le seuil critique d'écrasement, en d'autres termes la flèche supportée sont élevés, meilleure est la déformabilité et la résistance en flexion de la zone basse du pneumatique. Une valeur relative égale à 100 est retenue pour le pneumatique témoin servant de référence pour le test (ici, pneu P-I), une valeur supérieure indiquant une performance améliorée.

L'ensemble des résultats obtenus à ces différents tests a été résumé dans le tableau 2 ci-après.

Tableau 2

| Pneumatique : | P-I | P-II | P-IV | P-V |
|---|---|---|---|---|
| Câble d'ancrage : | C-I | C-II | C-IV | C-V |
| Endurance roulage longue durée : | 100 | 100 | 100 | 100 |
| Endurance roulage haute vitesse : | 100 | 100 | 100 | 100 |
| Montabilité : | 100 | > 200 | 104 | 150 |

On constate tout d'abord que le pneumatique P-II conforme à l'invention montre une endurance en roulage au moins égale à celle des pneumatiques témoins (P-I, P-IV et P-V).

Mais on observe surtout, de manière inattendue, un résultat très nettement amélioré en ce qui concerne la montabilité du pneumatique P-II renforcé du câble selon l'invention, comparativement :

- non seulement aux pneus témoins P-I et P-IV dont la structure d'ancrage utilise pourtant des câbles à élongation élevée, traités grand-allongement et donc nettement plus coûteux ;
- mais aussi au pneu P-V utilisant des câble d'ancrage à pas courts mais de construction différente non conforme à l'invention.

Seul le pneu P-II utilisant le câble selon l'invention a montré une excellente déformabilité, aucune déformation permanente n'ayant été observée, même sous un écrasement maximal de l'enveloppe. En outre, ce pneu P-II peut être plus facilement gauchi (périmètre plus aisément déformable) selon la direction axiale.

En résumé, grâce au câble spécifique du pneumatique de l'invention, les opérations de montage et démontage, notamment sur une roue monobloc, des pneumatiques selon l'invention peuvent ainsi être réalisées de manière plus simple et plus rapide.

Il est désormais possible d'utiliser des gommes d'ancrage à dureté élevée, favorables par ailleurs au comportement routier des véhicules, sans passer nécessairement par l'emploi de câbles traités grand allongement.

## Revendications

1. Pneumatique, comprenant pour permettre l'ancrage d'une armature de carcasse du pneumatique, le bourrelet comprenant un câble métallique à deux couches, le pneumatique étant **caractérisé en ce que** le câble métallique est de construction 4+N comportant une couche interne notée C1 de 4 fils de diamètre $d_1$ enroulés ensemble en hélice selon un pas $p_1$, cette couche C1 étant elle-même entourée d'une couche externe notée C2 de N fils de diamètre $d_2$ enroulés ensemble en hélice selon un pas $p_2$, ledit câble présentant en outre les caractéristiques suivantes, $d_1$, $d_2$, $p_1$ et $p_2$ étant en mm:

    - $0,25 < d_1 < 0,40$ ;
    - $0,25 < d_2 < 0,40$ ;
    - $3,5 < p_1 < 7 < p_2 < 14$,

2. Pneumatique selon la revendication 1, dans lequel les fils des couches C1 et C2 sont de diamètre identique.

3. Pneumatique selon les revendications 1 ou 2, dans lequel les couches C1 et C2 sont enroulées dans le même sens de torsion.

4. Pneumatique selon l'une quelconque des revendications 1 à 3, dans lequel, la couche C2 comporte de 8 à 12 fils.

5. Pneumatique selon la revendication 4, dans lequel la couche C2 comporte de 8 à 10 fils

6. Pneumatique selon l'une quelconque des revendications 1 à 5, dans lequel la couche externe C2 est une couche insaturée.

7. Pneumatique selon la revendication 6, dans lequel le câble a pour construction 4+9.

8. Pneumatique selon l'une quelconque des revendications 1 à 7, présentant les caractéristiques suivantes, $d_1$, $d_2$, $p_1$ et $p_2$ étant en mm:

    - $0,30 < d_1 < 0,40$;
    - $0,30 < d_2 < 0,40$ ;
    - $4,0 < p_1 < 7$ et $8 < p_2 < 14$.

9. Pneumatique selon a revendication 8, présentant les caractéristiques suivantes :

    - $4,5 \leq p_1, \leq 6,5$ et $8,5 \leq p_2 \leq 13,5$.

**10.** Pneumatique selon l'une quelconque des revendications 1 à 9, le métal du câble métallique étant de l'acier.

**11.** Pneumatique selon la revendication 10, l'acier étant un acier au carbone.

**12.** Pneumatique selon la revendication 11, l'acier au carbone ayant une teneur en carbone comprise entre 0,1% et 1,2%.

**13.** Pneumatique selon la revendication 12, Va-cier au carbone ayant une teneur en carbone comprise entre 0,5% et 1,1%.

**14.** Pneumatique selon la revendication 13, l'acier au carbone ayant une teneur en carbone comprise entre 0,6% et 1,0%.

**15.** Pneumatique selon l'une quelconque des revendications 1 à 14, l'allongement total à la rupture (At) du câble étant supérieur à 2,5%.

**16.** Pneumatique selon la revendication 15, At étant supérieur à 3,0%.

**17.** Pneumatique selon la revendication 16, At étant supérieur à 3,5%.

**18.** Pneumatique selon l'une quelconque des revendications 1 à 17, l'allongement fonctionnel (Af) du câble étant supérieur à 4,0%.

**19.** Pneumatique selon la revendication 18, Af étant supérieur à 5,0%.

**20.** Pneumatique selon la revendication 19, Af étant supérieur à 6,0%.

**21.** Pneumatique selon l'une quelconque des revendications précédentes, le câble étant orienté circonférentiellement et coopérant avec une portion adjacente de l'armature de carcasse par l'intermédiaire d'une composition de caoutchouc au contact dudit câble et de ladite armature de carcasse.

**22.** Pneumatique selon la revendication 21, la composition de caoutchouc présentant, à l'état vulcanisé, un module sécant en extension, à 10% d'allongement, qui est supérieur à 20 MPa.

**23.** Pneumatique selon la revendication 22, la composition de caoutchouc présentant, à l'état vulcanisé, un module sécant en extension, à 10% d'allongement, qui est supérieur à 30 MPa.

**24.** Pneumatique selon la revendication 23, la composition de caoutchouc présentant, à l'état vulcanisé, un module sécant en extension, à 10% d'allongement, qui est compris entre 40 et 70 MPa.

**25.** Pneumatique selon l'une quelconque des revendications 21 à, 25, ladite composition de caoutchouc comportant un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères.

**26.** Pneumatique selon la revendication 25, l'élastomère diénique étant choisi dans le groupe constitué par le caoutchouc naturel, les polyisoprènes de synthèse, les copolymères d'isoprène et les mélange de ces élastomères.

**27.** Pneumatique selon la revendication 26, le caoutchouc diénique étant majoritairement du caoutchouc naturel.

**28.** Pneumatique selon la revendication 27, le caoutchouc diénique étant un mélange de caoutchouc naturel et d'élastomère diénique synthétique.

**29.** Pneumatique selon la revendication 28, l'élastomère diénique synthétique étant choisi dans le groupe constitué par les polybutadiènes, les copolymères de butadiène-styrène et les mélanges de ces élastomères.

**Patentansprüche**

**1.** Luftreifen, der einen Wulst enthält, um die Verankerung einer Karkassenbewehrung des Luftreifens zu erlauben, wobei der Wulst ein zweischichtiges Drahtseil enthält, wobei der Luftreifen **dadurch gekennzeichnet ist, dass** das Drahtseil einen 4+N-Aufbau hat und eine mit C1 bezeichnete Innenschicht aus 4 Drähten mit einem Durchmesser $d_1$ aufweist, die zusammen gemäß einer Steigung $p_1$ schraubenförmig gewickelt sind, wobei diese Schicht C1 selbst von einer mit C2 bezeichneten Außenschicht von N Drähten mit einem Durchmesser $d_2$ umgeben ist, die zusammen gemäß einer Steigung $p_2$ schraubenförmig gewickelt sind, wobei das Seil außerdem die folgenden Merkmale aufweist, wobei $d_1$, $d_2$, $p_1$ und $p_2$ in mm sind:

- 0,25 < $d_1$ < 0,40;
- 0,25 < $d_2$ < 0,40;
- 3,5 < $p_1$ < 7 < $p_2$ < 14.

2. Luftreifen nach Anspruch 1, wobei die Drähte der Schichten C1 und C2 den gleichen Durchmesser haben.

3. Luftreifen nach den Ansprüchen 1 oder 2, wobei die Schichten C1 und C2 in der gleichen Torsionsrichtung aufgewickelt sind.

4. Luftreifen nach einem der Ansprüche 1 bis 3, wobei die Schicht C2 8 bis 12 Drähte aufweist.

5. Luftreifen nach Anspruch 4, wobei die Schicht C2 8 bis 10 Drähte aufweist.

6. Luftreifen nach einem der Ansprüche 1 bis 5, wobei die Außenschicht C2 eine ungesättigte Schicht ist.

7. Luftreifen nach Anspruch 6, wobei das Seil einen 4+9-Aufbau hat.

8. Luftreifen nach einem der Ansprüche 1 bis 7, der die folgenden Merkmale aufweist, wobei $d_1$, $d_2$, $p_1$ und $p_2$ in mm sind:

- 0,30 < $d_1$ < 0,40;
- 0,30 < $d_2$ < 0,40;
- 4, 0 < $p_1$ < 7 und 8 < $p_2$ < 14.

9. Luftreifen nach Anspruch 8, der die folgenden Eigenschaften aufweist:

- 4,5 ≤ $p_1$ ≤ 6,5 und 8,5 ≤ $p_2$ ≤ 13,5.

10. Luftreifen nach einem der Ansprüche 1 bis 9, wobei das Metall des Drahtseils Stahl ist.

11. Luftreifen nach Anspruch 10, wobei der Stahl ein Kohlenstoffstahl ist.

12. Luftreifen nach Anspruch 11, wobei der Kohlenstoffstahl einen Kohlenstoffgehalt zwischen 0,1% und 1,2% hat.

13. Luftreifen nach Anspruch 12, wobei der Kohlenstoffstahl einen Kohlenstoffgehalt zwischen 0,5% und 1,1% hat.

14. Luftreifen nach Anspruch 13, wobei der Kohlenstoffstahl einen Kohlenstoffgehalt zwischen 0,6% und 1,0% hat.

15. Luftreifen nach einem der Ansprüche 1 bis 14, wobei die Gesamtreißdehnung (At) des Seils größer als 2,5% ist.

16. Luftreifen nach Anspruch 15, wobei At größer als 3,0% ist.

17. Luftreifen nach Anspruch 16, wobei At größer als 3,5% ist.

18. Luftreifen nach einem der Ansprüche 1 bis 17, wobei die Betriebsdehnung (Af) des Seils größer als 4,0% ist.

19. Luftreifen nach Anspruch 18, wobei Af größer als 5,0% ist.

20. Luftreifen nach Anspruch 19, wobei Af größer als 6, 0% ist.

21. Luftreifen nach einem der vorhergehenden Ansprüche, wobei das Seil in Umfangsrichtung ausgerichtet ist und mit einem benachbarten Teil der Karkassenbewehrung mittels einer Kautschukzusammensetzung in Kontakt mit dem Seil und mit der Karkassenbewehrung zusammenwirkt.

**22.** Luftreifen nach Anspruch 21, wobei die Kautschukzusammensetzung im vulkanisierten Zustand einen Dehnungs-Sekantenmodul bei 10% Dehnung aufweist, der größer als 20MPa ist.

**23.** Luftreifen nach Anspruch 22, wobei die Kautschukzusammensetzung im vulkanisierten Zustand einen Dehnungs-Sekantenmodul bei 10% Dehnung aufweist, der größer als 30MPa ist.

**24.** Luftreifen nach Anspruch 23, wobei die Kautschukzusammensetzung im vulkanisierten Zustand einen Dehnungs-Sekantenmodul bei 10% Dehnung aufweist, der zwischen 40 und 70 MPa liegt.

**25.** Luftreifen nach einem der Ansprüche 21 bis 25, wobei die Kautschukzusammensetzung ein Dienelastomer aufweist, das aus der Gruppe ausgewählt wird, die aus den Polybutadienen, dem natürlichen Kautschuk, den synthetischen Polyisoprenen, den Butadien-Copolymeren, den Isopren-Copolymeren und den Mischungen dieser Elastomermaterialien besteht.

**26.** Luftreifen nach Anspruch 25, wobei das Dienelastomer aus der Gruppe ausgewählt wird, die aus dem natürlichen Kautschuk, den synthetischen Polyisoprenen, den Isopren-Copolymeren und den Mischungen dieser Elastomermaterialien besteht.

**27.** Luftreifen nach Anspruch 26, wobei der Dienkautschuk mehrheitlich natürlicher Kautschuk ist.

**28.** Luftreifen nach Anspruch 27, wobei der Dienkautschuk eine Mischung aus natürlichem Kautschuk und synthetischem Dienelastomer ist.

**29.** Luftreifen nach Anspruch 28, wobei das synthetische Dienelastomer aus der Gruppe ausgewählt wird, die aus den Polybutadienen, den Butadien-Styrol-Copolymeren und den Mischungen dieser Elastomermaterialien besteht.

**Claims**

**1.** Tyre comprising a tyre bead to permit anchoring of a carcass reinforcement of the tyre, the tyre bead comprising a metal cable having two layers , the tyre being **characterized in that** the metal cable is of construction 4+N comprising an inner layer C1 of 4 wires of diameter $d_1$ wound together in a helix at a pitch $p_1$, this layer C1 itself being surrounded by an outer layer C2 of N wires of diameter $d_2$ wound together in a helix at a pitch $p_2$, said cable furthermore having the following characteristics, $d_1$, $d_2$, $p_1$ and $p_2$ being expressed in mm:

- $0.25 < d_1 < 0.40$;
- $0.25 < d_2 < 0.40$;
- $3.5 < p_1 < 7 < p_2 < 14$.

**2.** Tyre according to Claim 1, in which the wires of the layers C1 and C2 are of identical diameter.

**3.** Tyre according to Claims 1 or 2, in which the layers C1 and C2 are wound in the same direction of twist.

**4.** Tyre according to any one of Claims 1 to 3, in which the layer C2 comprises from 8 to 12 wires.

**5.** Tyre according to Claim 4, in which the layer C2 comprises from 8 to 10 wires.

**6.** Tyre according to any one of Claims 1 to 5, in which the outer layer C2 is an unsaturated layer.

**7.** Tyre according to Claim 6, in which the cable has the construction 4+9.

**8.** Tyre according to any one of Claims 1 to 7, having the following characteristics, $d_1$, $d_2$, $p_1$ and $p_2$ being expressed in mm:

- $0.30 < d_1 < 0.40$;
- $0.30 < d_2 < 0.40$;
- $4.0 < p_1 < 7$ and $8 < p_2 < 14$.

9.  Tyre according to Claim 8, having the following characteristics:

    - $4.5 \le p_1 \le 6.5$ and $8.5 \le p_2 \le 13.5$.

10. Tyre according to any one of Claims 1 to 9, the metal of the metal cable being steel.

11. Tyre according to Claim 10, the steel being a carbon steel.

12. Tyre according to Claim 11, the carbon steel having a carbon content of between 0.1% and 1.2%.

13. Tyre according to Claim 12, the carbon steel having a carbon content of between 0.5% and 1.1%.

14. Tyre according to Claim 13, the carbon steel having a carbon content of between 0.6% and 1.0%.

15. Tyre according to any one of Claims 1 to 14, the total elongation at break (At) of the cable being greater than 2.5%.

16. Tyre according to Claim 15, At being greater than 3.0%.

17. Tyre according to Claim 16, At being greater than 3.5%.

18. Tyre according to any one of Claims 1 to 17, the operational elongation (Af) of the cable being greater than 4.0%.

19. Tyre according to Claim 18, Af being greater than 5.0%.

20. Tyre according to Claim 19, Af being greater than 6.0%.

21. Tyre according to any one of previous Claims, the cable being circumferentially oriented and cooperating with an adjacent portion of the carcass reinforcement by means of a rubber composition in contact with said cable and said carcass reinforcement.

22. Tyre according to Claim 21, the rubber composition having, in the vulcanised state, a secant tensile modulus, at 10% elongation, which is greater than 20 MPa.

23. Tyre according to Claim 22, the rubber composition having, in the vulcanised state, a secant tensile modulus, at 10% elongation, which is greater than 30 MPa.

24. Tyre according to Claim 23, the rubber composition having, in the vulcanised state, a secant tensile modulus, at 10% elongation, which is between 40 and 70 MPa.

25. Tyre according to any one of Claims 21 to 25, said rubber composition comprising a diene elastomer selected from the group consisting of polybutadienes, natural rubber, synthetic polyisoprenes, butadiene copolymers, isoprene copolymers and mixtures of these elastomers.

26. Tyre according to Claim 25, the diene elastomer being selected from the group consisting of natural rubber, synthetic polyisoprenes, isoprene copolymers and mixtures of these elastomers.

27. Tyre according to Claim 26, the diene rubber being majoritarily natural rubber.

28. Tyre according to Claim 27, the diene rubber being a mixture of natural rubber and synthetic diene elastomer.

29. Tyre according to Claim 28, the synthetic diene elastomer being selected from the group consisting of polybutadienes, butadiene/styrene copolymers and mixtures of these elastomers.

Fig. 1

Fig. 2

# Fig. 3

# Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 582196 A
- EP 664231 A
- EP 664232 A
- EP 664233 A
- US 5660656 A
- WO 9854006 A
- WO 2004009380 A
- EP 751015 A
- US 5702548 A
- EP 1277600 A

- EP 648891 A
- WO 9841682 A
- EP 919406 A
- EP 243851 A
- US 4795523 A
- EP 264600 A
- US 4963207 A
- EP 242840 A
- US 4895692 A